# EUROPÄISCHE PATENTSCHRIFT

(11) **EP 1 844 315 B1**
(45) Veröffentlichungstag und Bekanntmachung des Hinweises auf die Patenterteilung: **05.10.2011**
(21) Anmeldenummer: 06701168.4
(22) Anmeldetag: 13.01.2006
(51) Int. Cl.: G01N 15/06

(54) **MESSANORDNUNG UND VERFAHREN ZUR BESTIMMUNG DER KONZENTRATION VON PARTIKELN IN GASGEMISCHEN**
MEASURING ARRANGEMENT AND METHOD FOR DETERMINING THE CONCENTRATION OF PARTICLES IN GAS MIXTURES
DISPOSITIF DE MESURE ET PROCEDE POUR DETERMINER LA CONCENTRATION EN PARTICULES DANS DES MELANGES GAZEUX

(30) Priorität: 21.01.2005 DE 102005003124
(43) Veröffentlichungstag der Anmeldung: 17.10.2007
(73) Patentinhaber: Robert Bosch GmbH, 70442 Stuttgart (DE)
(72) Erfinder: RÖSCH, Sabine, 71254 Ditzingen (DE); OCHS, Thorsten, 71701 Schwieberdingen (DE); KAMP, Bernhard, 71640 Ludwigsburg (DE); SCHITTENHELM, Henrik, 70180 Stuttgart (DE)
(86) Internationale Anmeldenummer: PCT/EP2006/050197
(87) Internationale Veröffentlichungsnummer: WO 2006/077198

(56) Entgegenhaltungen:
- DE-A1- 10 133 384
- DE-A1- 10 156 946
- DE-B3- 10 331 838
- US-A- 4 656 832

## Beschreibung

Die Erfindung geht von einer Messanordnung und einem Verfahren zur Bestimmung der Konzentration von Partikeln in Gasgemischen sowie deren Verwendung gemäß der im Oberbegriff der unabhängigen Ansprüche definierten Art aus.

### Stand der Technik

Im Zuge einer sich verschärfenden Umweltgesetzgebung erlangen zunehmend Abgasnachbehandlungssysteme Bedeutung, die die Filtration bzw. Eliminierung von in Verbrennungsabgasen existierenden Rußpartikeln ermöglichen. Um die Funktionstüchtigkeit derartiger Abgasnachbehandlungssysteme zu überprüfen bzw. zu überwachen, werden Sensoren benötigt, mit denen auch im Langzeitbetrieb eine genaue Ermittlung der aktuell im Verbrennungsabgas vorliegenden Partikelkonzentration ermöglicht werden kann. Darüber hinaus soll mittels derartiger Sensoren eine Beladungsprognose beispielsweise von Dieselpartikelfiltem ermöglicht werden, um eine hohe Systemsicherheit zu erreichen und dadurch kostengünstigere Filtermaterialien einsetzen zu können.

Die DE10156946 offenbart einen Sensor zur Detektion von Partikeln in Gasen, durch Messung eines Stroms zwischen Elektroden, wobei ein Heizelement vorhanden ist, welches auch zur Messung des Temperatur dient.

Aufgabe der vorliegenden Erfindung ist es, eine Messanordnung zur Bestimmung der Partikelkonzentration eines Gasgemisches bereitzustellen, die Temperaturwechselbeanspruchungen gut widersteht.

### Zeichnung

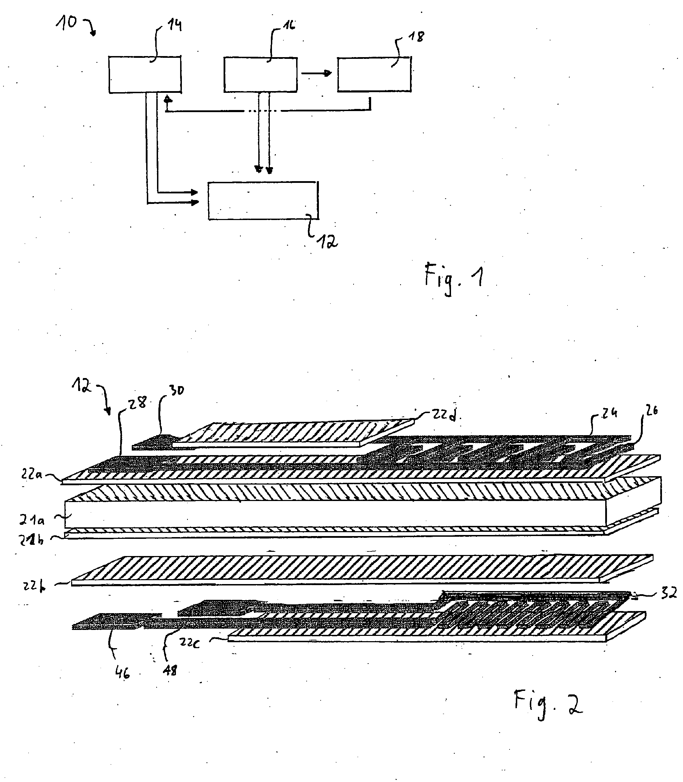

Ein Ausführungsbeispiel einer Messanordnung ist in der Zeichnung schematisch vereinfacht dargestellt und wird in der nachfolgenden Beschreibung näher erläutert. Dabei zeigt Figur 1 eine schematische Darstellung der Komponenten der Messanordnung und Figur 2 das in Figur 1 schematisch dargestellte Sensorelement in einer Explosionsdarstellung.

### Beschreibung des Ausführungsbeispiels

In Figur 1 ist ein prinzipieller Aufbau einer Ausführungsform dargestellt. Mit 10 ist eine Messanordnung zur Bestimmung der Konzentration von Partikeln in Gasgemischen, insbesondere von Ruß, dargestellt. Die Messanordnung 10 umfasst ein Sensorelement 12, das mit dem zu bestimmenden Gasgemisch in physischem Kontakt steht und ein der Partikelkonzentration des Gasgemischs proportionales Messsignal generiert. Gleichzeitig wird über das Sensorelement 12 eine Bestimmung der Temperatur des Gasgemischs vorgenommen. Dazu ist das Sensorelement 12 beispielsweise mit einer Strom oder Spannungsversorgung 14 elektrisch kontaktiert. Weiterhin umfasst die Messanordnung 10 eine Auswerteeinheit 16, die ebenfalls mit dem Sensorelement 12 in elektrischem Kontakt steht und der Messwertaufnahme bzw. -verarbeitung dient. Die Auswerteeinheit erhält dabei sowohl ein Messsignal, das proportional zur abgelagerten Partikelmasse ist, als auch ein Messsignal, das die aktuelle Temperatur des Sensorelementes repräsentiert. Da die eine Partikelmasse abbildenden Messsignale des Sensorelements 12 eine starke Temperaturabhängigkeit zeigen, wird mittels der Auswerteeinheit 16 vorzugsweise eine Korrelation zwischen den Messsignalen des Sensorelementes und der aktuellen Temperatur des Sensorelementes hergestellt und daraus temperaturbereinigte Messwerte berechnet. Dies geschieht beispielsweise durch Anwendung von entsprechenden Kompensationsalgorithmen. Zusätzlich oder alternativ kann das Adsorptions- bzw. Desorptionsverhalten der angelagerten Partikel bei bestimmten Temperaturen hinterlegt und in die Messwertbildung einbezogen werden. Auf diese Weise können sowohl Temperatureinflüsse auf das elektrische Messsignal des Sensorelements als auch Temperatureinflüsse bedingt durch das Anlagerungsverhalten der zu bestimmenden Partikel, die sich indirekt auf das Messsignal auswirken, kompensiert werden. Dies verbessert die Güte der erhaltenen Messwerte. Eine Berechnung der Partikelkonzentration ist auf der Basis der Messwerte möglich, sofern die Strömungsgeschwindigkeit des Gasgemisches bekannt ist. Diese bzw. der Volumenstrom des Gasgemisches kann bspw. mittels eines geeigneten weiteren Sensors bestimmt werden.

Die Auswerteeinheit 16 steht vorzugsweise in Kontakt mit einer Steuereinheit 18, die der Regulierung des mittels der Strom- oder Spannungsversorgung 14 an das Sensorelement 12 anzulegenden Stroms bzw. der entsprechenden Spannung dient. Insbesondere dann, wenn den Messsignalen des Sensorelements 12 ein Sättigungsverhalten zu entnehmen ist, wird mittels der Steuereinheit 18 eine Regenerierung des Sensorelements 12 eingeleitet. Dazu wird auf ein entsprechendes Signal der Steuereinheit 18 hin mittels der Strom- und Spannungsversorgung 14 an das Temperaturmesselement des Sensorelements 12 eine erhöhte elektrische Leistung angelegt, sodass es zu einer Erwärmung des Sensorelements 12 kommt. Diese Erwärmung erfolgt vorzugsweise bis zu einer Temperatur, bei der es zu einem Abbrand bzw. zu einer verhältnismäßig raschen Desorption bzw. Oxidation der angelagerten Partikel kommt. Dann wird die an das Temperaturmesselement angelegte elektrische Leistung wieder im wesentlichen auf ihr Niveau vor der Regenerierung reduziert.

In Figur 2 sind Einzelheiten des in Figur 1 dargestellten Sensorelementes 12 abgebildet. Das Sensorelement 12 umfasst beispielsweise sauerstoffionenleitende Festelektrolytschichten 21a, 21b. Die Festelektrolytschicht 21a wird dabei als keramische Folie ausgeführt und bildet einen planaren keramischen Körper. Sie besteht aus einem sauerstoffionenleitenden Festelektrolytmaterial, wie beispielsweise mit Y₂O₃ stabilisiertem oder teilstabilisiertem ZrO₂.

Die Festelektrolytschicht 21b wird dagegen beispielsweise mittels Siebdruck eines pastösen keramischen Materials auf der Festelektrolytschicht 21 a erzeugt. Als keramische Komponente des pastösen Materials wird dabei bevorzugt dasselbe Festelektrolylmaterial verwendet, aus dem auch die Festelektrolytschicht 21 a besteht.

Weiterhin weist das Sensorelement beispielsweise eine Vielzahl von elektrisch isolierenden keramischen Schichten 22a, 22b, 22c auf. Die Schichten 22a - 22c werden dabei ebenfalls mittels Siebdruck eines pastösen keramischen Materials beispielsweise auf den Festelektrolytschichten 21a, 21b erzeugt. Als keramische Komponente des pastösen Materials wird dabei erfindungsgemäß bariumhaltiges Aluminiumoxid verwendet, da dieses auch bei Temperaturwechselbeanspruchungen über einen langen Zeitraum einen weitgehend konstant hohen elektrischen Widerstand aufweist. Alternativ ist auch der Zusatz anderer Erdalkalioxide möglich.

Auf einer Großfläche des Sensorelements 10 sind zwei Messelektroden 24, 26 aufgebracht, die vorzugsweise als ineinander verzahnte Interdigitalelektroden ausgebildet sind. Die Verwendung von Interdigitalelektroden als Messelektroden 24, 26 ermöglicht eine besonders genaue Bestimmung des elektrischen Widerstandes bzw. der elektrischen Leitfähigkeit des sich zwischen den Messelektroden 24, 26 befindenden Oberflächenmaterials. Zur Kontaktierung der Messelektroden 24, 26 sind im Bereich eines dem Gasgemisch abgewandten Ende des Sensorelements 12 Kontaktflächen 28, 30 vorgesehen. Dabei sind die Zuleitungsbereiche der Elektroden 24, 26 vorzugsweise durch eine weitere, elektrisch isolierende, keramische Schicht 22d gegenüber den Einflüssen eines das Sensorelement 12 umgebenden Gasgemischs abgeschirmt.

Auf der mit den Messelektroden 24, 26 versehenen Großfläche des Sensorelements 12 kann zusätzlich eine aus Übersichtlichkeitsgründen nicht dargestellte poröse Schicht vorgesehen sein, die die Messelektroden 24, 26 in ihrem ineinander verzahnten Bereich gegenüber einem direkten Kontakt mit dem zu bestimmenden Gasgemisch abschirmt. Dabei ist die Schichtdicke der porösen Schicht vorzugsweise größer als die Schichtdicke der Messelektroden 24, 26. Die poröse Schicht ist vorzugsweise offenporös ausgeführt, wobei die Porengröße so gewählt wird, dass die zu bestimmenden Partikel im Gasgemisch in die Poren der porösen Schicht eindiffundieren können. Die Porengröße der porösen Schicht liegt dabei vorzugsweise in einem Bereich von 2 bis 10 µm. Die poröse Schicht ist aus einem keramischen Material ausgeführt, das vorzugsweise dem Material der Schicht 22a ähnlich ist oder diesem entspricht und kann mittels Siebdruck hergestellt werden. Die Porosität der porösen Schicht kann durch Zusatz von Porenbildnern zu der Siebdruckpaste entsprechend eingestellt werden.

Während des Betriebs des Sensorelementes 12 wird an die Messelektroden 24, 26 eine Spannung angelegt. Da die Messelektroden 24, 26 auf der Oberfläche der elektrisch isolierenden Schicht 22a angeordnet sind, kommt es zunächst im wesentlichen zu keinem Stromfluss zwischen den Messelektroden 24, 26.

Enthält ein das Sensorelement 12 umströmendes Gasgemisch Partikel, insbesondere Ruß, so lagern sich diese auf der Oberfläche des Sensorelementes 12 ab. Durch die offenporige Struktur der porösen Schicht diffundieren die Partikel durch die poröse Schicht hindurch bis in unmittelbare Nähe der Messelektroden 24, 26. Da die Partikel eine bestimmte elektrische Leitfähigkeit aufweisen, kommt es bei ausreichender Beladung der Oberfläche des Sensorelementes 12 mit Partikeln zu einem ansteigenden Stromfluss zwischen den Messelektroden 24, 26, der mit dem Ausmaß der Beladung korreliert.

Wird nun an die Messelektroden 24, 26 eine vorzugsweise konstante Gleich- oder Wechselspannung angelegt und der zwischen den Messelektroden 24, 26 auftretende Stromfluss ermittelt, so kann aus dem Integral des Stromflusses über der Zeit auf die abgelagerte Partikelmasse bzw. auf den aktuellen Partikelmassenstrom, insbesondere Rußmassenstrom, und auf die Partikelkonzentration im Gasgemisch geschlossen werden. Mit dieser Messmethode wird die Konzentration all derjenigen Partikel in einem Gasgemisch erfasst, die die elektrische Leitfähigkeit des sich zwischen den Messelektroden 24, 26 befindenden keramischen Materials positiv oder negativ beeinflussen.

Eine weitere Möglichkeit besteht darin, den Anstieg des Stromflusses über der Zeit zu ermitteln und aus dem Quotienten aus Stromflussanstieg und Zeit bzw. aus dem Differentialquotienten aus Stromfluss nach der Zeit auf die abgelagerte Partikelmasse bzw. auf den aktuellen Partikelmassenstrom, insbesondere Rußmassenstrom, und auf die Partikelkonzentration im Gasgemisch zu schließen.

Darüber hinaus umfasst das Sensorelement 12 ein Temperaturmesselement 32, das in Form einer elektrischen Widerstandsleiterbahn ausgeführt ist. Die Widerstandsleiterbahn ist vorzugsweise aus einem Cermet-Material ausgeführt; vorzugsweise als Mischung von Platin oder einem Platinmetall mit keramischen Anteilen, wie beispielsweise Aluminiumoxid. Die Widerstandsleiterbahn ist weiterhin vorzugsweise in Form eines Mäanders ausgebildet und weist an beiden Enden elektrische Anschlüsse 46, 48 auf. Durch Anlegen einer entsprechenden Spannung bzw. eines entsprechenden Stroms an die Anschlüsse 46, 48 der Widerstandsleiterbahn und durch Bestimmen des elektrischen Widerstandes derselben kann auf die Temperatur des Sensorelements geschlossen werden. Eine alternative bzw. zusätzliche Möglichkeit der Tempraturmessung besteht darin, die per se temperaturabhängige Leitfähigkeit des zwischen der Widerstandsleiterbahn des Temperaturmesselements 32 und den Messelektroden 24, 26 angeordneten keramischen Körpers zu bestimmen und aus dessen Höhe auf die Temperatur des Sensorelementes zu schließen.

Übliche Sensorelemente zur Bestimmung insbesondere von Rußpartikeln weisen weiterhin keramische Heizelemente auf, die in Form einer elektrischen Widerstandsleiterbahn ausgeführt sind und der Aufheizung der Sensorelemente auf eine Temperatur dienen, bei der es zu einem Abbrand der auf dem Sensorelement abgelagerten Rußpartikel kommt. Die Ausbildung eines separaten Heizelementes bedingt jedoch einen relativ aufwendigen Gesamtaufbau des Sensorelements.

Das vorliegende Sensorelement 12 macht jedoch den Einbau eines separaten Heizelementes entbehrlich. Dazu wird insbesondere dann, wenn den Messsignalen des Sensorelementes 12 ein Sättigungsverhalten zu entnehmen ist, mittels der Steuereinheit 18 eine Regenerierung des Sensorelementes 12 eingeleitet. Dazu wird auf ein entsprechendes Signal der Steuereinheit 18 hin mittels der Strom- und Spannungsversorgung 14 an das Temperaturmesselement 30 des Sensorelements 12 eine erhöhte elektrische Leistung angelegt, sodass es zu einer Erwärmung des Sensorelements 12 kommt. Diese Erwärmung erfolgt vorzugsweise bis zu einer Temperatur, bei der es zu einem Abbrand bzw. zu einer verhältnismäßig raschen Desorption bzw. Oxidation der angelagerten Partikel kommt. Dann wird die an das Temperaturmesselement 32 angelegte elektrische Leistung wieder im wesentlichen auf ihr Niveau vor der Regenerierung reduziert. Der Betrieb des Temperaturmesselementes 32 erfolgt somit in einem Zweiphasenbetrieb. Dabei wird das Temperaturmesselement 32 in einer ersten Phase in einem Messmodus betrieben, bei dem parallel zur Bestimmung des elektrischen Widerstandes mittels der Messelektroden 24, 26 eine Temperaturbestimmung über das Temperaturmesselement 32 erfolgt. In einer zweiten Phase, die der Regenerierung des Sensorelementes 12 dient, erfolgt mittels dem Temperaturmesselement 32 eine Beheizung des Sensorelementes 12. Nach Ende der Regenerierung wird das Temperaturmesselement 32 wieder im Temperaturmessmodus der ersten Phase betrieben.

Die vorliegende Erfindung ist nicht auf die in den Figuren 1 und 2 dargestellten Ausführungsformen eines Sensorelements beschränkt, sondern es können zahlreiche Abwandlungen dieses Sensorelements vorgenommen werden. So ist es beispielsweise möglich, zusätzliche keramische Schichten im Sensorelement vorzusehen oder den Mehrschichtaufbau des Sensorelements anwendungsbezogen zu vereinfachen, sowie weitere Messelektroden vorzusehen. Auch die Verwendung mehrerer Heiz- und Temperaturmesselemente ist möglich.

Weiterhin können einzelne oder mehrere der Elemente 14, 16, 18 zu einem Kombiinstrument zusammengefasst werden.

Die Anwendung des beschriebenen Sensorelements ist nicht auf die Bestimmung von Rußpartikeln in Abgasen von Verbrennungsmotoren beschränkt, sondern es kann allgemein zur Bestimmung der Konzentration von Partikeln, die die elektrische Leitfähigkeit eines keramischen Substrats bei Anlagerung verändern, beispielsweise in chemischen Herstellungsprozessen oder Abluftnachbehandlungsanlagen, eingesetzt werden.

## Patentansprüche

1. Messanordnung zur Bestimmung der Konzentration von Partikeln in Gasgemischen, insbesondere von Ruß, umfassend ein Sensorelement (12) mit mindestens einem dem zu bestimmenden Gas ausgesetzten Messelement und mit mindestens einem in das Sensorelement (12) integrierten Temperaturmesselement (32), sowie eine Steuereinheit (18), wobei das Messelement eine erste und eine zweite Messelektrode (24, 26) umfasst, durch die ein elektrischer Widerstand oder ein zwischen der ersten und der zweiten Messelektrode (24, 26) fließender elektrischer Strom bestimmbar ist, und wobei auf ein Signal der Steuereinheit (18) hin phasenweise am Temperaturmesselement (32) eine veränderte elektrische Leistung anliegt, **dadurch gekennzeichnet, dass** die erste und die zweite Messelektrode (24, 26) auf einem elektrisch isolierenden Substrat (22a) angeordnet ist, wobei das elektrisch isolierende Substrat (22a) ein erdalkalioxidhaltiges Aluminiumoxid enthält.

2. Messanordnung nach Anspruch 1, **dadurch gekennzeichnet, dass** die erste und/oder zweite Messelektrode (24, 26) als Interdigitalelektrode ausgeführt ist.

3. Messanordnung nach einem der vorhergehenden Ansprüche, **dadurch gekennzeichnet, dass** eine Auswertevorrichtung (16) vorgesehen ist, die einen zwischen den Messelektroden (24, 26) anliegenden Stromfluss oder elektrischen Widerstand ermittelt und dies als Maß für die abgelagerte Partikelmasse ausgibt.

4. Verfahren zur Bestimmung der Konzentration von Partikeln in Gasgemischen, insbesondere von Ruß in Abgasen von Verbrennungsmotoren, mittels einer Messanordnung nach einem der vorhergehenden Ansprüche, wobei an ein in ein Sensorelement integriertes Temperaturmesselement (32) in einem ersten Zeitraum eine elektrische Leistung angelegt wird, die im Wesentlichen nicht zur Erwärmung des Sensorelementes (12) führt und dass in einem zweiten Zeitraum eine abweichende elektrische Leistung an das Temperaturmesselement (32) angelegt wird, die zur Erwärmung des Sensorelementes (12) führt, wobei im zweiten Zeitraum eine Regenerierung des Sensorelementes (12) durchgeführt wird, indem das Sensorelement (12) auf eine Temperatur erhitzt wird, die zum Abbrand der abgelagerten Partikel führt, **dadurch gekennzeichnet, dass** eine Regenerierung des Sensorelementes (12) eingeleitet wird, sobald der sich zwischen Messelektroden (24, 26) des Sensorelements (12) einstellende Stromfluss einen vorbestimmten Wert überschreitet und/oder für einen vorbestimmten Zeitraum einen konstanten Wert annimmt.

5. Verfahren nach Anspruch 4, **dadurch gekennzeichnet, dass** im ersten Zeitraum ein elektrischer Widerstand des Temperaturmesselementes (32) als Maß für die Temperatur des Sensorelementes (12) bestimmt wird.

6. Verfahren nach einem der Ansprüche 4 oder 5, **dadurch gekennzeichnet, dass** im ersten Zeitraum eine mittels dem Temperaturmesselement (32) ermittelte Temperatur und ein mittels eines in das Sensorelement integrierten Messelements bestimmter elektrischer Widerstand oder eine gemessene elektrische Stromstärke einer Auswerteeinheit (16) zugeführt wird und der elektrische Widerstand oder die Stromstärke mittels eines in der Auswerteeinheit (16) hinterlegten Kompensationsalgorithmus in einen temperaturbereinigten elektrischen Widerstand überführt wird, wobei der Kompensationsalgorithmus eine Korrelation zwischen der Temperatur des Sensorelements (12) und dessen elektrischem Widerstand bei mindestens einem Beladungszustand und/oder mindestens eine Korrelation der Temperatur des Sensorelements (12) und dem Anlagerungsverhalten der Partikel bei mindestens einer Partikelkonzentration im Gasgemisch beinhaltet.

7. Verwendung eines Sensorelements nach einem der Ansprüche 1 bis 3 oder eines Verfahrens nach einem der Ansprüche 4 bis 6 zur Überwachung der Betriebsweise eines Dieselmotors oder der Funktionstüchtigkeit und/oder des Beladungszustands eines Partikelfilters.

## Claims

1. Measuring arrangement for determining the concentration of particles in gas mixtures, in particular of carbon black, comprising a sensor element (12) having at least one measuring element which is exposed to the gas to be determined and having at least one temperature measuring element (32) which is integrated in the sensor element (12), as well as a control unit (18), the measuring element comprising a first measuring electrode (24) and a second measuring electrode (26) which can be used to determine an electrical resistance or an electrical current flowing between the first and second measuring electrodes (24, 26), and a changed electrical power being applied to the temperature measuring element (32) in phases in response to a signal from the control unit (18), **characterized in that** the first and second measuring electrodes (24, 26) are arranged on an electrically insulating substrate (22a), the electrically insulating substrate (22a) containing an aluminium oxide which contains an alkaline earth oxide.

2. Measuring arrangement according to Claim 1, **characterized in that** the first measuring electrode (24) and/or second measuring electrode (26) is/are in the form of an interdigital electrode.

3. Measuring arrangement according to one of the preceding claims, **characterized in that** an evaluation apparatus (16) is provided, which apparatus determines a flow of current applied between the measuring electrodes (24, 26) or an electrical resistance and outputs this as a measure of the deposited particle mass.

4. Method for determining the concentration of particles in gas mixtures, in particular of carbon black in exhaust gases of internal combustion engines, by means of a measuring arrangement according to one of the preceding claims, an electrical power which substantially does not heat the sensor element (12) being applied to a temperature measuring element (32) integrated in a sensor element in a first period of time, and a different electrical power which heats the sensor element (12) being applied to the temperature measuring element (32) in a second period of time, the sensor element (12) being regenerated in the second period of time by heating the sensor element (12) to a temperature which burns off the deposited particles, **characterized in that** regeneration of the sensor element (12) is initiated as soon as the flow of current established between measuring electrodes (24, 26) of the sensor element (12) exceeds a predetermined value and/or assumes a constant value for a predetermined period of time.

5. Method according to Claim 4, **characterized in that** an electrical resistance of the temperature measuring element (32) is determined in the first period of time as a measure of the temperature of the sensor element (12).

6. Method according to either of Claims 4 and 5, **characterized in that** a temperature determined using the temperature measuring element (32) and an electrical resistance determined using a measuring element integrated in the sensor element or a measured electrical current intensity is/are supplied to an evaluation unit (16) in the first period of time, and the electrical resistance or the current intensity is converted into a temperature-corrected electrical resistance by means of a compensation algorithm stored in the evaluation unit (16), the compensation algorithm comprising a correlation between the temperature of the sensor element (12) and its electrical resistance in at least one loading state and/or at least one correlation between the temperature of the sensor element (12) and the accumulation behaviour of the particles for at least one particle concentration in the gas mixture.

7. Use of a sensor element according to one of Claims 1 to 3 or of a method according to one of Claims 4 to 6 for monitoring the method of operation of a diesel engine or the functionality and/or the loading state of a particle filter.

## Revendications

1. Dispositif de mesure pour déterminer la concentration en particules dans des mélanges gazeux, notamment de suie, comprenant un élément de détection (12) équipé d'au moins un élément de mesure exposé au gaz à déterminer et d'au moins un élément de mesure de température (32) intégré dans l'élément de détection (12), ainsi qu'une unité de commande (18), l'élément de mesure comprenant une première et une deuxième électrode de mesure (24, 26) permettant de déterminer une résistance électrique ou un courant électrique circulant entre la première et la deuxième électrode de mesure (24, 26), et une puissance électrique modifiée étant présente en phase au niveau de l'élément de mesure de température (32) sur un signal de l'unité de commande (18), **caractérisé en ce que** la première et la deuxième électrode de mesure (24, 26) sont disposées sur un substrat (22a) électriquement isolant, le substrat (22a) électriquement isolant contenant de l'oxyde d'aluminium contenant un oxyde alcalinoterreux.

2. Dispositif de mesure selon la revendication 1, **caractérisé en ce que** la première et/ou deuxième électrode de mesure (24, 26) prennent la forme d'une électrode interdigitale.

3. Dispositif de mesure selon l'une quelconque des revendications précédentes, **caractérisé en ce qu'**un dispositif d'analyse (16) est prévu, qui calcule un flux de courant présent entre les électrodes de mesure (24, 26) ou la résistance électrique et les transmet comme valeur mesurée pour le calcul de la masse des particules déposées.

4. Procédé pour déterminer la concentration en particules dans des mélanges gazeux, notamment de suie, dans des gaz d'échappement de moteurs à combustion interne, à l'aide d'un dispositif de mesure selon l'une quelconque des revendications précédentes, une puissance électrique étant appliquée au niveau d'un élément de mesure de température (32) intégré dans un élément de détection pendant un premier laps de temps, ladite puissance n'induisant pour l'essentiel aucun échauffement de l'élément de détection (12) et une puissance électrique différente étant appliquée au niveau de l'élément de mesure de température (32) pendant un deuxième laps de temps, ladite puissance induisant un échauffement de l'élément de détection (12), une régénération de l'élément de détection (12) étant réalisée pendant le deuxième laps de temps en ce que l'élément de détection (12) est chauffé à une température induisant la combustion des particules déposées, **caractérisé en ce qu'**une régénération de l'élément de détection (12) est déclenchée dès que le flux de courant présent entre les électrodes de mesure (24, 26) de l'élément de détection (12) dépasse une valeur prédéfinie et/ou présente une valeur constante pendant un laps de temps prédéfini.

5. Procédé selon la revendication 4, **caractérisé en ce qu'**une résistance électrique de l'élément de mesure de température (32) est défini comme une valeur mesurée de la température de l'élément de détection (12) pendant le premier laps de temps.

6. Procédé selon l'une quelconque des revendications 4 ou 5, **caractérisé en ce qu'**une température calculée pendant le premier laps de temps à l'aide de l'élément de mesure de température (32) et une résistance électrique définie à l'aide d'un élément de mesure intégré dans l'élément de détection ou une puissance du courant électrique mesurée sont amenées à une unité d'analyse (16) et **en ce que** la résistance électrique ou la puissance du courant sont transférées dans une résistance électrique corrigée de toute température à l'aide d'un algorithme de compensation mémorisé dans l'unité d'analyse (16), l'algorithme de compensation comprenant une corrélation entre la température de l'élément de détection (12) et sa résistance électrique dans au moins un état de charge et/ou au moins une corrélation entre la température de l'élément de détection (12) et le comportement de dépôt des particules à au moins une concentration particulaire dans le mélange gazeux.

7. Utilisation d'un élément de détection selon l'une quelconque des revendications 1 à 3 ou d'un procédé selon l'une quelconque des revendications 4 à 6 en vue de surveiller le bon fonctionnement d'un moteur diesel ou la capacité fonctionnelle et/ou l'état de charge d'un filtre à particules.
